# EUROPEAN PATENT SPECIFICATION

(11) **EP 3 409 975 B1**
(45) Date of publication and mention of the grant of the patent: **22.09.2021**
(21) Application number: 18185104.9
(22) Date of filing: 02.12.2014
(51) Int. Cl.: F16G 11/02, F16G 11/10

(54) **CRIMPING COLLAR AND TWISTABLE SECURITY CABLE**
CRIMPBUND UND VERDREHBARES SICHERUNGSSEIL
COLLIER DE SERTISSAGE ET CÂBLE DE SÉCURITÉ PLIABLE

(30) Priority: 02.12.2013 US 201361910897 P; 02.12.2013 US 201361910874 P
(43) Date of publication of application: 05.12.2018
(62) Divisional of application: 14868346.9
(73) Proprietor: Schlage Lock Company LLC, Indianapolis, IN 46219 (US)
(72) Inventor: Kindstrand, Daniel, Hugh, Pembroke, MA 02359 (US); Warren, Donald, H., Natick, MA 01760 (US)
(74) Representative: Ganguillet, Cyril

(56) References cited:
- US-A- 4 941 434
- US-A1- 2006 107 494

## Description

### TECHNICAL FIELD

The present invention generally relates to crimping collar assemblies and security cables.

### BACKGROUND

Cables having looped ends are sometimes used as theft-preventing security cables or load-bearing slings. Conventional security cables suffer from a variety of limitations, disadvantages and problems. In certain circumstances, it is desirable to not only prevent the portable object from being carried away from the structure, but also to prevent substantial movement of the object with respect to the structure. For example, when construction equipment is being transported on the exterior of a vehicle (e.g., on the roof of a van or in the bed of a pickup truck), the equipment must be tied down to ensure that it does not fall off or rattle while the vehicle is moving. Conventional tie-downs do not provide a reliable means of locking an object, and conventional security cables do not allow for sufficient twisting or bending to tightly secure the objects before locking. As such, it is common practice to use a security cable to prevent theft of the equipment, and a separate tie-down strap to prevent rattling or movement of the equipment. US Patent No. 4,941,434 discloses a device which allows small animals to be tethered by a leash in vehicles and which allows the handler to quickly attach and detach the animal's leash to a car safety belt keeper member.

The looped ends of some security cables are held in place by a crimping collar. In many looped cables, the point of failure is commonly the connection between the cable and the collar, as the cable itself can withstand a higher pull-test value than the connection. Therefore, a need remains for further improvements in security cable systems and methods.

### SUMMARY

The cable assembly according to one embodiment includes a cable and a collar. The collar includes a first opening, a second opening and a third opening, each of which extends through the collar along a longitudinal dimension of the collar. The cable includes a looped end and a first cable segment extending through the first opening, a second cable segment extending through the second opening, a third cable segment extending into the third opening, and a fourth cable segment forming a loop between the first and second cable segments. The collar is crimped or swaged to the cable and is securely engaged with the first, second and third segments of the cable.

In another embodiment, a security cable includes a cable and a coupling mechanism. The cable includes a plastically-deformable central core having shape retention characteristics, a plurality of wire groups positioned about the central core wherein each of the wire groups includes a plurality of wires, and a flexible outer coating surrounding the central core and the plurality of wire groups. The coupling mechanism is attached to first and second ends of the cable and is structured to selectively couple the first and second ends of the cable to one another, and wherein the coupling mechanism includes a lock. The cable is manually deformable to a plurality of shapes, and the central core is structured to substantially retain the cable in each of the plurality of shapes.

### BRIEF DESCRIPTION OF THE FIGURES

FIG. 1 illustrates a crimp collar according to one embodiment.
FIG. 2 illustrates a looped cable assembly including the crimp collar of FIG. 1.
FIG. 3 illustrates a crimp collar according to another embodiment.
FIG. 4 illustrates a looped cable assembly including the crimp collar of FIG. 3.
FIG. 5 is a cross-sectional illustration of a conventional cable.
FIG. 6 is a cross-sectional illustration of a security cable according to one embodiment of the present invention.
FIG. 7 illustrates an exemplary security cable attaching a portable object to a frame.
FIGS. 8-10 depict security cables according to other embodiments of the present invention.

### DETAILED DESCRIPTION OF ILLUSTRATIVE EMBODIMENTS

For the purposes of promoting an understanding of the principles of the invention, reference will now be made to the embodiments illustrated in the drawings and specific language will be used to describe the same. It will nevertheless be understood that no limitation of the scope of the invention is thereby intended. Any alterations and further modifications in the described embodiments, and any further applications of the principles of the invention as described herein are contemplated as would normally occur to one skilled in the art to which the invention relates.

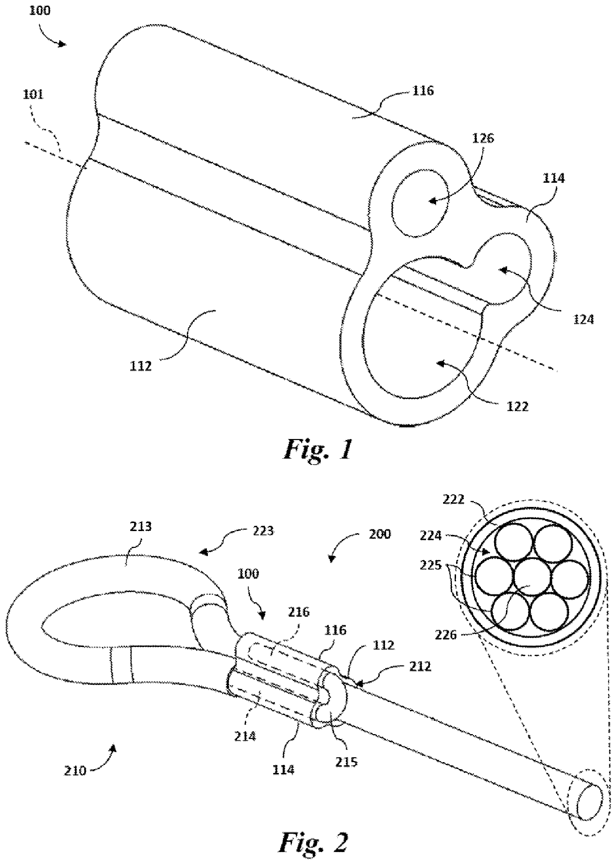

With reference to FIG. 1, a collar 100 according to one form of the invention includes first, second and third collar portions 112, 114, 116 which respectively define first, second and third openings 122, 124, 126 extending therethrough. The illustrated openings 122, 124, 126 are sized and shaped to receive portions of a cable having a substantially circular outer cross-section. Accordingly, each of the openings 122, 124, 126 has a substantially circular cross-section. In other embodiments, one or more of the openings 122, 124, 126 may have a non-circular cross-section. While other forms are contemplated, the openings 122, 124, 126 extend in an axial direction that is substantially parallel to a longitudinal axis 101 of the collar 100. In the illustrated embodiment, the first and second openings 122, 124 are connected to and in transverse communication with one another, and are not connected to or in transverse communication with the third opening 126. Additionally, in the illustrated embodiment, the first opening 122 has a greater inner diameter *dᵢ* than the inner diameters *dᵢ* of each of the second and third openings 124, 126, and the second and third openings 124, 126 have substantially the same or similar inner diameters di.

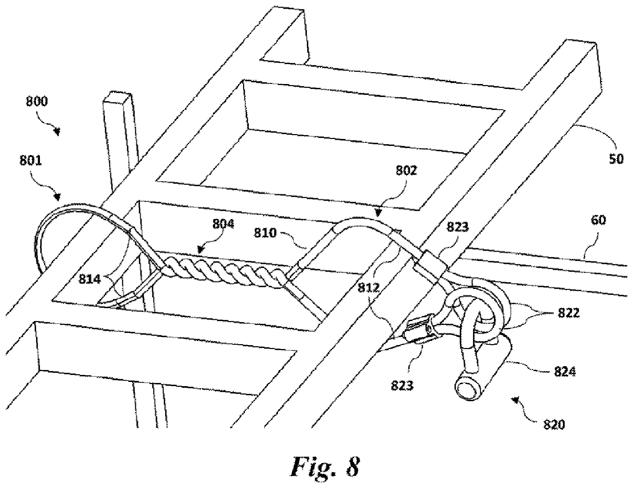

With reference to FIG. 2, illustrated therein is a looped cable assembly 200 including the collar 100 and a cable 210. In certain embodiments, the looped cable assembly 200 may be utilized as a security cable such as, for example, as described below with reference to FIG. 8. The cable 210 includes coated cable segments 212, 213 having a plastic outer coating 222 surrounding a wire rope 224, and bare cable segments 214, 216 which include the wire rope 224 without the outer coating 222. In the collar 100, the inner diameter *dᵢ* of the first opening 122 corresponds to the outer diameter *dₒ* of the coated cable segments 212 (including the outer coating 222), and the inner diameter *dᵢ* of second and third openings 124, 126 corresponds to the outer diameter *dₒ* of the wire rope 224 (without the outer coating 222). In one form, the wire rope 224 includes a central inner core 226, and six groups 225 of braided or twisted wires surrounding the central core 226. In some embodiments, the central core 226 may be a solid core. However, in other embodiments, the central core 226 may itself comprise a group of braided or twisted wires.

At an initial stage of manufacturing, the cable 210 may include the outer coating 222 along its entire length. During manufacture of the looped cable assembly 200, a portion of the cable 210 may be stripped of the outer coating 222 to expose the wire rope 224. The cable 210 may then be passed through the collar 100 three times. In the first pass, the cable 210 is passed through the first opening 122 such that the first coated cable segment 212 is positioned in the first collar portion 112. The second coated cable segment 213 is then bent or wrapped back toward the collar 100, thereby forming a cable loop 223. In the second pass, the exposed wire rope 224 is passed through the second opening 124 such that the first bare cable segment 214 is positioned in the second collar portion 114. The second bare cable segment 216 is then bent or wrapped back toward the collar 100, thereby forming a cable turn or elbow 215. In the third pass, the exposed wire rope 224 is passed into or through the third opening 126 such that the second bare cable segment 216 is positioned in the third collar portion 116. Once the three passes have been completed, the collar 100 is deformed to securely engage the collar 100 with the cable 210 such as, for example, by a mechanical crimping press. With the collar 100 deformed, the first collar portion 112 directly engages the outer coating 222 of the cable 210, and the second and third collar portions 114, 116 directly engage the outer wire groups 225 of the wire rope 224. It is also contemplated that the collar 100 may be deformed in any other suitable manner such as, for example, by crushing or swaging.

When an excessive tensile force is applied to the looped cable assembly 200, the crimp or swage is stressed, and may in some circumstances begin to fail. In such case, the first bare cable segment 214 may begin to slip or slide out of the first collar portion 114. This in turn results in a tightening of the cable turn or elbow 215, which may be positioned along an axis arranged substantially perpendicular to axes of the second and third openings 124, 126. When this occurs, the tensile force in the cable assembly 200 must be translated from the first bare cable segment 214 to the now straightened elbow 215, and from the elbow 215 to the second bare cable segment 216. Because both the first and second bare cable segments 214, 216 are arranged substantially orthogonal to the elbow 215, much of the tensile force is countered by frictional forces between the collar 100 and the wire rope 224 at the bends between the elbow 215 and the first and second bare cable segments 214, 216. As a result, the amount of force that must be countered by the engagement between the third collar portion 116 and the second bare cable segment 216 is greatly reduced, thereby increasing the amount of tensile force that the cable assembly 200 can endure without collar failure. Thus, it should be appreciated that the looped cable 200 can provide a greater holding force than traditional looped cables. This added strength increases the pull force required to break the swage or crimp, thereby resulting in an increased amount of weight that can be lifted or towed using the looped cable 200 such as, for example, when used as a sling, and/or resulting in improved security such as, for example, when used as a cable.

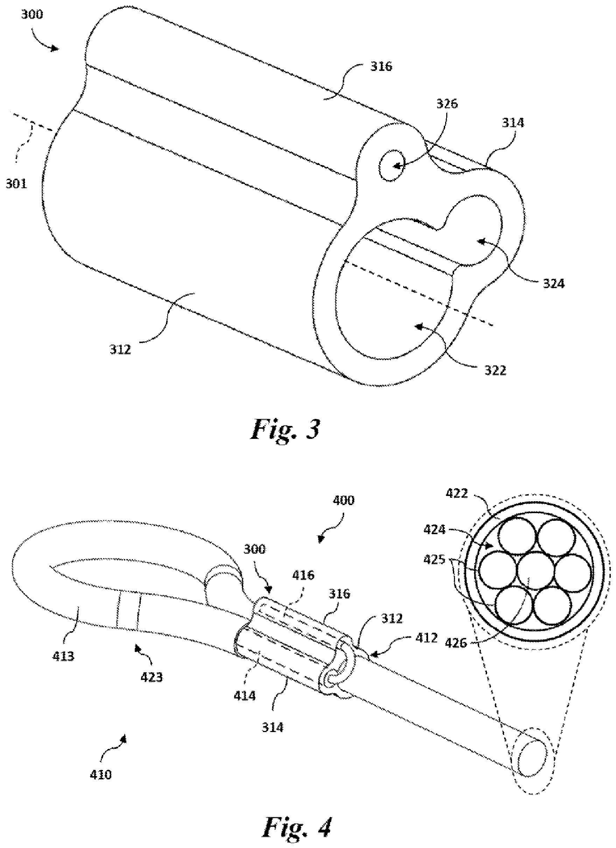

With reference to FIGS. 3 and 4, shown therein is a looped cable assembly 400 according to a second embodiment which includes a collar 300 and a cable 410. The cable 410 includes first and second coated cable segments 412, 413, a bare rope cable segment 414, and a bare core segment 416. The coated cable segments 412, 413 include a plastic outer coating 422 surrounding a wire rope 424 having a central core 426 and a plurality of braided or twisted wire groups 425 positioned about the central core 426. The bare rope cable segment 414 includes the wire rope 424, but does not include the outer coating 422. The bare core segment 416 includes the central core 426, but does not include the wire groups 425 or the outer coating 422. In the illustrated embodiment, the central core 426 is a solid core consisting of a single flexible wire. However, it is also contemplated that the central core 426 may comprise a group of braided or twisted wires, which may be the same as or similar to the wire groups 425 which surround the central core 426.

The collar 300 includes first, second and third collar portions 312, 314, 316 respectively defining first, second and third openings 322, 324, 326 extending through the collar 300. The first opening 322 has an inner diameter *dᵢ* corresponding to the outer diameter *dₒ* of the cable 410 (including the coating 422). The second opening 324 has an inner diameter *dᵢ* corresponding to the outer diameter *dₒ* of the wire rope 424. The third opening 326 has an inner diameter *dᵢ* corresponding the outer diameter *dₒ* of the central core 426. While other forms are contemplated, the illustrated openings 322, 324, 326 extend axially along the collar 300 in a direction substantially parallel to a longitudinal axis 301 of the collar 300.

The looped cable assembly 400 may be manufactured in a manner similar to that described above with regard to FIGS. 1 and 2. In one form, a portion of the cable 410 is stripped of the outer coating 422, thereby exposing the wire rope 424, and a portion of the wire rope 424 is stripped of the outer wire groups 425, thereby exposing the central core 426. The cable 410 may then be passed through the collar 300 three times. In the first pass, the cable 410 is passed through the first opening 322 such that the first coated cable segment 412 is positioned in the first collar portion 312. The second coated cable segment 413 is then bent or wrapped back toward the collar 300, thereby forming a loop 423. In the second pass, the bare rope cable segment 414 is passed through the second opening 324 such that the bare rope cable segment 414 is positioned in the second collar portion 314. In the third pass, the exposed central core 426 is passed into or through the third opening 326 such that the bare core segment 416 is positioned in the third collar portion 316. Once the three passes have been completed, the collar 300 may be deformed to engage the collar 300 with the cable 410 such as, for example, by swaging or a mechanical press. With the collar 300 deformed, the first collar portion 312 directly engages the outer coating 422, the second collar portion 314 directly engages the outer wire groups 425 of the wire rope 424, and the third collar portion 316 directly engages the central core 426.

While illustrative forms of a three-pass looped cable have been described, other forms are also contemplated as falling within the scope of the invention. For example, certain embodiments may include the exposed wire rope positioned within the first two collar openings, and an exposed solid core wire or a braided/twisted core wire positioned in the third collar opening. In other embodiments, the cable need not necessarily include a plastic coating, and the cable may consist essentially of the wire rope.

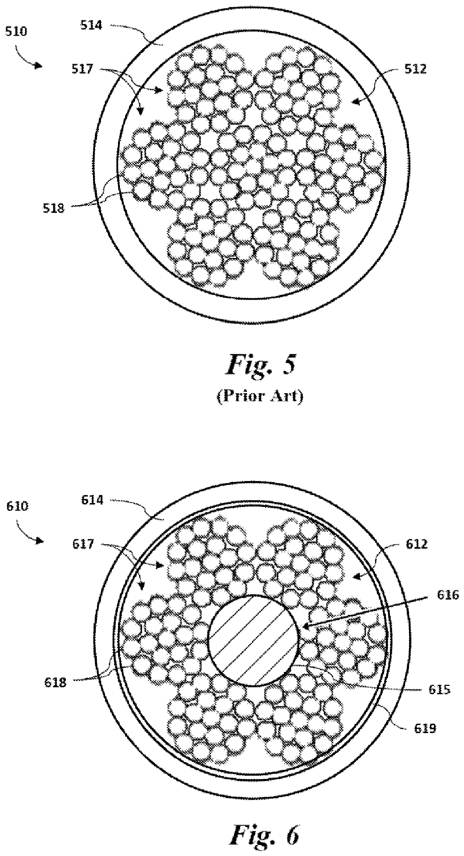

FIGS. 5 and 6 illustrate two exemplary forms of a coated cable which may be utilized in combination with the collars 100, 300 to form the looped cable assemblies 200, 400. FIG. 5 depicts a conventional cable 510 including a wire rope 512 and an outer coating 514. The wire rope 512 includes a plurality of wire groups 517, each of which includes a plurality of individual wires 518 which are braided or twisted together to form the cable 510.

With reference to FIG. 6, an exemplary coated cable 610 according to one embodiment includes a wire rope 612 and a protective coating 614 formed of a material such as, for example, a vinyl material. The wire rope 612 includes a central core 616 and a plurality of wire groups 617 surrounding the central core 616. Each of the wire groups 617 includes several individual wires 618 which are braided or twisted together. The wire groups 617 are in turn braided or twisted about the central core 616. In the illustrated embodiment, each of the outer wire groups 617 includes a number of wires 618 arranged in three concentric layers. It is also contemplated that the outer wire groups 617 could include any number and configuration of the wires 618.

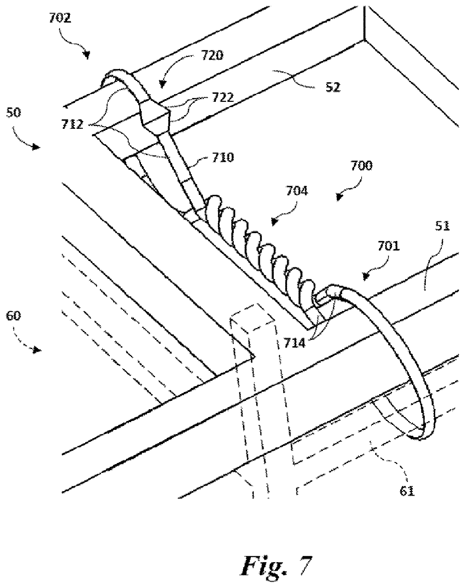

The cable 610 has a high tensile strength and may be utilized, for example, as a towing cable or a security cable. Exemplary forms of the latter are described below with reference to FIGS. 7-10. In certain embodiments, the cable 610 may include high-strength fibers to increase the tensile strength of the cable 610. For example, the cable 610 may include a sheath 619 of woven high-strength fibers positioned between the protective coating 614 and the wire groups 617. The high-strength fibers may be formed of a material such as, for example, a nylon, a high-modulus polyethylene, or a para-aramid synthetic fiber such as poly-paraphenylene terephthalamide (sold under the trademark KEVLAR®). In such embodiments, one or more of the wire groups 617 may include the high-strength fibers, or the high-strength fibers may be woven around the wire rope 612, and the coating 614 may seal the fibers and the wire rope 612 to provide protection from the elements.

In the illustrated embodiment, the core 616 is configured as a solid core formed of a ductile material having a high plastic deformation range, and is capable of being plastically-deformed and retaining a shape to which it is deformed. This feature is sometimes referred to as "shape memory". Thus, when the cable 610 is manually deformed to a particular shape, the core 616 will substantially retain the cable 610 in that shape until acted upon by an outside force. The term "substantially" as used herein may be applied to modify a quantitative representation which could permissibly vary without resulting in a change in the basic function to which it relates. For example, if a user bends a portion of the cable 610 upward, it will remain in substantially the same position until the user bends the cable 610 to a new shape. By contrast, the conventional wire groups 517 have no shape memory, and thus cannot hold the conventional cable 510 in a given configuration. While the illustrated solid core 616 is formed as a unitary, single piece, it is also contemplated that the core 616 may be formed from multiple pieces so long as the core 616 is capable of the shape retention/memory described above.

In the illustrated form, the outer diameter of the core 616 substantially corresponds to the outer diameter of each of the outer wire groups 617. In certain forms, the outer diameter of the core 616 may be substantially equal to the outer diameters of the outer wire groups 617. It is also contemplated that the core 616 may be of a lesser or greater outer diameter than that of the outer wire groups 617 such as, for example, in embodiments including more or fewer than six outer wire groups 617. Furthermore, while the illustrated core 616 is surrounded by a single layer of outer wire groups 617, it is also contemplated that that the outer wire groups 617 may be positioned about the core 616 in two or more concentric layers of the outer wire groups 617.

The material and diameter of the core 616 may be selected based upon a number of factors such as, for example, flexibility, tensile strength, plastic deformation range, and fatigue limits. The material and diameter may be selected to allow the cable 610 to twist, bend back and forth multiple times, and retain its shape. In certain embodiments, the core 616 may include a friction-reducing coating 615 to facilitate the travel of the wires 618 across the surface of the core 616 when the cable 610 is twisted. In some embodiments, the core 616 is formed of a metallic material. In other embodiments, the core 616 is formed of a metallic material having shape memory or shape retention capabilities. In still other embodiments, the core 616 is formed of a shape-memory alloy material such as, for example, Nitinol. However, it should be understood that the core 616 may also be formed of other suitable materials.

FIG. 7 depicts an exemplary security cable 700 illustrated to attach a portable object 50 to a stationary frame 60. In the illustrated form, the portable object 50 is a ladder, and the stationary frame 60 is an equipment rack on a vehicle. It is to be understood, however, that the security cable 700 may be utilized to prevent any number of portable objects from being carried away or removed from a stationary structure. In this context, "portable" and "stationary" are relative terms in that the portable object 50 is much easier for an unauthorized person to move than the stationary frame 60. Thus, while the illustrated frame 60 is attached to a movable vehicle, the frame 60 may still be considered "stationary" as used herein.

The security cable 700 includes a cable 710 of the type illustrated in FIG. 6 and described above, and a coupling 720 connecting the two cable ends 712 to one another. The coupling 720 includes two coupling portions 722, each of which is attached to one of the cable ends 712. When the coupling portions 722 are attached to one another, the coupling 720 selectively prevents separation of the two portions 722, thereby maintaining the cable ends 712 in close proximity to one another. It should be appreciated that the coupling 720 is illustrated in schematic form since many configurations of couplings are contemplated for use with the security cable 700. Illustrative forms of the coupling 720 are described below with reference to FIGS. 8-10.

In order to secure the object 50 to the frame 60, a user may wrap the cable 710 around a first object portion 51 and a first frame portion 61, thereby forming a first loop 701. Once the first loop 701 is formed, the cable 710 can effectively be considered as being divided into two segments 714. The user may then twist the two segments 714 together, thereby tightening the loop 701 and forming a twisted section 704. Once the loop 701 is of a desired tightness, the user forms a second loop 702 around a second object portion 52. Due to the shape-retaining or shape-memory properties of the cable 710, the security cable 700 will substantially remain in the selected shape and configuration, even if the user releases one or both ends 712 of the cable 710, for example, to connect the coupling portions 722 to one another.

After the second loop 702 is formed, the user may connect the coupling portions 722 to one another, thereby locking the object 50 to the frame 60. When the loops 701, 702 are of a proper tightness, the security cable 700 retains the object 50 snugly against the frame 60 (due in part to the shape-retention or shape-memory of the cable 710), thereby reducing rattling which may otherwise occur during operation of the vehicle. If the user determines that the object 50 is connected to the frame 60 too loosely (for example, as depicted in FIG. 7) or too tightly, the user may disconnect or disengage the coupling 720 and twist the segments 714 to adjust the number of turns in the twisted section 704, thereby tightening or loosening the first loop 701. When the coupling portions 722 are reconnected or reengaged, the second loop 702 will also be looser or tighter, depending upon whether turns were added to or removed from the twisted section 704.

While the foregoing description relates to an exemplary method of securing the object 50 to the frame 60, it is to be understood that the precise method used may depend on a number of factors such as, for example, user preference and the particular shape/configuration of the object 50, the frame 60, and/or the coupling 720. For example, in certain embodiments, each of the first and second loops 701, 702 may be formed around at least one of an object portion and a frame portion so long as both the object 50 and the frame 60 include a portion positioned within one of the loops 701, 702. In other embodiments, one of the loops 701, 702 may be formed around a portion of the object 50, and the other of the loops 701, 702 may be formed around a portion of the frame 60. In further embodiments, one of the loops 701, 702 may be formed around both an object portion and a frame portion, and the other of the loops 701, 702 may be formed around another portable object and/or stationary frame.

FIGS. 8-10 depict exemplary modifications and other configurations and embodiments of the security cable 700. It should be understood that like reference characters between the embodiment illustrated in FIG. 7 and the embodiments illustrated in FIGS. 8-10 make reference to similar elements and features. Each of the security cables described hereinafter is substantially similar to the security cable 700. In the interest of conciseness, the following descriptions focus primarily on the differences between the illustrated security cables and the previously-described security cable 700.

FIG. 8 illustrates a security cable 800 including a padlock-type coupling 820. Each of the cable ends 812 is formed into an end loop 822. Collars 823 may be crimped or swaged onto the cable 810 to hold and maintain the end loops 822 in a looped configuration. In certain forms, each of the collars 823 may be configured substantially similar to one of the collars 100, 300. In such forms, the cable ends 812 may pass through the collar 823 three or more times, for example as described above with reference to FIGS. 1-4. Once the second security cable loop 802 is formed, the shackle of a padlock 824 may be passed through the end loops 822 and locked to the padlock body. In this configuration, the end loops 822 are coupled to one another through the padlock 824, thereby preventing unauthorized removal of the security cable 800. While the padlock 824 is illustrated as a key-operable padlock, it is also contemplated that other forms of padlocks may be utilized such as, for example, combination padlocks.

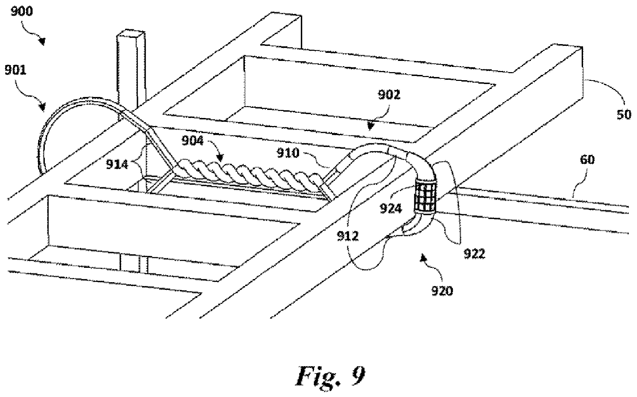

FIG. 9 depicts a security cable 900 including a combination lockhead coupling 920. The lockhead coupling 920 includes a pair of lockheads 922, each of which is coupled to one of the cable ends. The lockheads 922 remain coupled to one another until a proper combination is selected on an interface 924. As such, when the security cable 900 is installed and the lockheads 922 are coupled, a user cannot remove the security cable 900 without entering the proper combination on the interface 924.

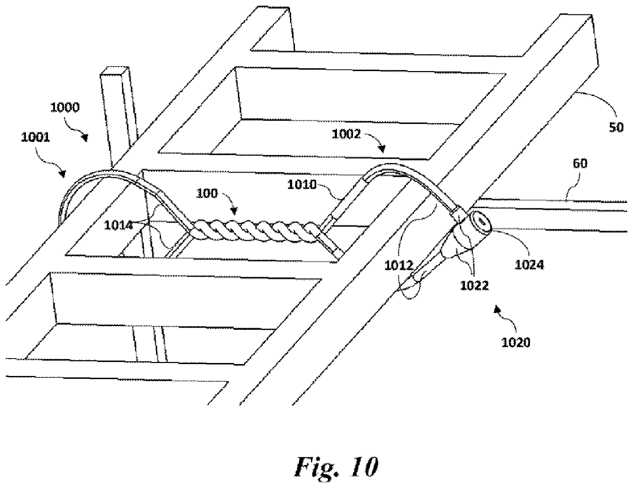

FIG. 10 illustrates a security cable 1000 including a keyed lockhead coupling 1020. Each of the cable ends 1012 is coupled to a lockhead 1022, and the lockheads 1022 are configured to remain coupled until a locking plug 1024 is actuated by a proper key. As such, when the security cable 1000 is installed and the lockheads 1022 are coupled, a user cannot remove the security cable 1000 without utilizing a proper key with the locking plug 1024.

One aspect of the present application includes a security cable including a cable and a coupling mechanism. The cable includes a plastically-deformable central core having shape retention characteristics; a plurality of wire groups positioned about the central core, wherein each of the wire groups includes a plurality of wires; and a flexible outer coating surrounding the central core and the plurality of wire groups. The coupling mechanism is attached to first and second ends of the cable and structured to selectively couple the first and second ends of the cable to one another, the coupling mechanism including a lock. The cable is manually deformable to a plurality of shapes, and wherein the central core is structured to substantially retain the cable in each of the plurality of shapes.

Features of the aspect may include: wherein the first and second ends of the cable are coupled together by the coupling mechanism to form a loop, and wherein the coupling mechanism forms a portion of the loop; wherein the lock comprises a padlock; wherein the lock includes a first lockhead coupled to the first end of the cable, and a second lockhead coupled to the second end of the cable; wherein the first and second lockheads have a locked state in which the lockheads are selectively coupled to one another, and an unlocked state in which the lockheads are selectively separable from one another; wherein the lock comprises a key-operated lock; wherein the lock comprises a combination lock; wherein the cable further includes a sheath of woven high-strength fiber positioned between the flexible outer coating and the plurality of wire groups; wherein the coupling mechanism comprises means for selectively coupling and decoupling the first and second ends of the cable; a friction-reducing coating on an outer surface of the central core; wherein each of the wire groups has a first outer diameter, and the central core has a second outer diameter substantially corresponding to the first outer diameter; wherein the second outer diameter is substantially equal to the first outer diameter; wherein the central core of the cable comprise a unitary solid core; wherein the central core is formed of a ductile material having a high plastic deformation range to provide the shape retention characteristics; wherein the security cable has a manually deformed state defining one of the plurality of shapes, and wherein the central core is structured to substantially retain the shape-retaining security cable in the manually deformed state; wherein the shape retention characteristics of the central core comprise shape memory characteristics; wherein the central core is formed of a shape memory material.

Another aspect of the application may include a method of securing a portable object to a stationary structure, the method comprising: wrapping a first segment of a security cable around a first portion of the object and a first portion of the structure, wherein the security cable is structured to retain a shape to which it is deformed; forming a first loop around the first portion of the object and the first portion of the structure by bringing the first segment of the security cable into contact with a second segment of the security cable; twisting the first and second segments of the security cable about one another, thereby tightening the first loop and forming a twisted section of the security cable; forming, with the first and second segments of the security cable, a second loop around at least one of a second portion of the object and a second portion of the structure; and selectively coupling a first end of the security cable to a second end of the security cable with a coupling device, thereby selectively securing the object to the structure.

Features of the aspect may include: determining if the first loop is of a desired tightness, and in response to determining that the first loop is not of the desired tightness, adjusting the tightness of the first loop, the adjusting comprising: decoupling the first and second ends of the security cable; twisting the first and second segments of the security cable about one another in a direction corresponding to whether more or less tightness is desired; reforming the second loop around the at least one of the second portion of the object and the second portion of the structure; and recoupling, with the coupling device, the first end of the security cable with the second end of the security cable.

Another aspect of the application may include a security cable, comprising: a shape-retaining security cable having a first end and an opposite second end, including: a plastically-deformable central core having an outer core diameter; and a plurality of wire groups circumferentially surrounding the central core, each of the wire groups comprising a plurality of wires, and wherein each of the wires has an outer wire diameter that is less than the outer core diameter; and a coupling device including a lock structured to selectively couple the first end of the security cable to the second end of the security cable; and wherein the shape-retaining security cable has a manually deformed state defining one of a plurality of shapes, and wherein the central core is structured to substantially retain the shape-retaining security cable in the manually deformed state.

Features of the aspect may include: wherein the shape-retaining security cable includes a first segment and a second segment; and wherein, in the deformed state, the first and second segments are tightly twisted about one another to form a tightly twisted cable section, and the central core is structured to resist untwisting of the tightly twisted cable section.

Another aspect of the application may include a method of forming a looped cable from a cable and a collar, comprising: positioning a first segment of the cable in a first opening of the collar; positioning a second segment of the cable in a second opening of the collar; positioning a third segment of the cable in a third opening of the collar; forming a loop with a fourth segment of the cable, wherein the fourth segment of the cable is positioned between the first and second segments of the cable; and deforming the collar to a deformed state which engages the first, second and third segments of the cable and substantially preventing movement of the first, second and third segments of the cable relative to the collar.

Features of the aspect may include: wherein the deforming the collar includes at least one of crimping and swaging the collar; wherein the cable includes a wire rope and an outer coating, the method further comprising removing the coating from the second and third segments of the cable prior to the deforming; further comprising removing a plurality of wire groups from the third segment of the cable prior to the deforming.

Another aspect of the application may include a cable assembly, comprising: a collar including a first opening, a second opening and a third opening, wherein each of the openings extends through the collar along a longitudinal dimension of the collar; and a cable comprising a looped end including a first cable segment extending through the first opening, a second cable segment extending through the second opening, a third cable segment extending into the third opening, and a fourth cable segment forming a loop between the first and second cable segments; and wherein the collar is crimped or swaged to the cable and is securely engaged with the first, second and third cable segments.

Features of the aspect may include: wherein the cable comprises a wire rope and an outer coating, the first and fourth cable segments include the wire rope and the outer coating, and the second and third cable segments do not include the outer coating; wherein the wire rope includes a central core and a plurality of wire groups positioned about the central core, and wherein the second cable segment includes the central core and the plurality of wire groups, and wherein the third cable segment includes at least the central core; wherein the third cable segment further includes the plurality of wire groups and wherein the collar is directly engaged with the outer coating of the first cable segment and the wire groups of the second and third cable segments; wherein the third cable segment does not include the plurality of wire groups, and wherein the collar is directly engaged with the outer coating of the first cable segment, the wire groups of the second cable segment, and the central core of the third cable segment; wherein the central core comprises a solid core consisting essentially of a single wire having an outer diameter corresponding to an outer diameter of each of the wire groups; wherein each of the openings extends in a direction substantially parallel to a longitudinal axis of the collar; wherein the first opening is connected to and in transverse communication with the second opening; wherein the third opening is not connected to or in transverse communication with either the first opening or the second opening; wherein the second cable segment consists essentially of the wire rope, and the third cable segment consists essentially of the central core.

Another aspect of the application may include a method, comprising: providing a collar including a first portion defining a first opening having a first inner diameter, a second portion defining a second opening having a second inner diameter, and a third portion defining a third opening having a third inner diameter; providing a cable including a first cable segment having a first outer diameter corresponding to the first inner diameter of the first opening, a second cable segment having a second outer diameter corresponding to the second inner diameter of the second opening, a third cable segment having a third outer diameter corresponding to the third inner diameter of the third opening, and a fourth cable segment connecting the first and second cable segments; positioning the first cable segment in the first opening; forming a loop with the fourth cable segment; positioning the second cable segment in the second opening; positioning the third cable segment in the third opening; and deforming the collar such that the first portion securely engages the first cable segment, the second portion securely engages the second cable segment, and the third portion securely engages the third cable segment.

Features of the aspect may include: wherein the providing the cable includes providing a coated cable including wire rope and an outer coating surrounding the wire rope, the wire rope including a central core and a plurality of wire groups positioned about the central core, and wherein an outer diameter of the coated cable defines the first outer diameter of the first cable segment; wherein the providing the cable further comprises removing the outer coating from the second and third cable segments, and wherein an outer diameter of the wire rope defines the second outer diameter of the second cable segment; wherein the outer diameter of the wire rope further defines the third outer diameter of the third cable segment; wherein the providing the cable further comprises removing the wire groups from the third cable segment, and wherein an outer diameter of the central core defines the third outer diameter of the third cable segment; wherein the first, second and third openings in the collar extend along a direction substantially parallel to a longitudinal axis of the collar.

While the invention has been illustrated and described in detail in the drawings and foregoing description, the same is to be considered as illustrative and not restrictive in character, it being understood that only the preferred embodiments have been shown and described .

It should be understood that while the use of words such as preferable, preferably, preferred or more preferred utilized in the description above indicate that the feature so described may be more desirable, it nonetheless may not be necessary and embodiments lacking the same may be contemplated as within the scope of the invention, the scope being defined by the claims that follow. In reading the claims, it is intended that when words such as "a," "an," "at least one," or "at least one portion" are used there is no intention to limit the claim to only one item unless specifically stated to the contrary in the claim. When the language "at least a portion" and/or "a portion" is used the item can include a portion and/or the entire item unless specifically stated to the contrary.

## Claims

1. A method of forming a looped cable (200; 400) from a cable (210; 410; 510; 610) and a collar (100; 300), comprising:
positioning a first cable segment (212; 412) of the cable (210; 410; 510; 610) in a first opening (122; 322) of the collar (100; 300);
positioning a second cable segment (214; 414) of the cable (210; 410; 510; 610) in a second opening (124; 324) of the collar (100; 300);
positioning a third cable segment (216; 416) of the cable (210; 410; 510; 610) in a third opening (126; 326) of the collar (100; 300);
wherein each of the openings (122, 124, 126; 322, 324, 326) extends through the collar (100; 300) along a longitudinal dimension of the collar (100; 300);
forming a loop (223; 423) with a fourth cable segment (213; 413) of the cable (210; 410; 510; 610), wherein the fourth cable segment (213; 413) of the cable (210; 410; 510; 610) is positioned between the first cable segment (212; 412) and the second cable segment (214; 414) of the cable (210; 410; 510; 610); and
deforming the collar (100; 300) to a deformed state by at least one of crimping and swaging the collar (100; 300), which securely engages the collar (100; 300) about the first cable segment (212; 412), the second cable segment (214; 414) and the third cable segment (216; 416) of the cable (210; 410; 510; 610), and substantially preventing movement of the first cable segment (212; 412), the second cable segment (214; 414) and the third cable segment (216; 416) of the cable (210; 410; 510; 610) relative to the collar (100; 300).

2. The method of claim 1, wherein the cable (210; 410; 510; 610) includes a wire rope (224; 424; 512; 612) and an outer coating (222; 422; 514; 614), the method further comprising removing the coating (222; 422; 514; 614) from the second cable segment (214; 414) and the third cable segment (216; 416) of the cable (210; 410; 510; 610) prior to the deforming and preferably further comprising removing a plurality of wire groups (225; 425; 517; 617) from the third cable segment (216; 416) of the cable (210; 410; 510; 610) prior to the deforming.

3. The method of claim 1, wherein the collar (100; 300) includes a first portion (112; 312) defining the first opening (122; 322), the first opening (122; 322) having a first inner diameter;
wherein the collar (100; 300) includes a second portion (114; 314) defining the second opening (124; 324), the second opening (124; 324) having a second inner diameter;
wherein the collar (100; 300) includes a third portion (116; 316) defining the third opening (126; 326), the third opening (126; 326) having a third inner diameter;
wherein the first cable segment (212; 412) of the cable (210; 410; 510; 610) has a first outer diameter corresponding to the first inner diameter of the first opening (122; 322);
wherein the second cable segment (214; 414) of the cable (210; 410; 510; 610) has a second outer diameter corresponding to the second inner diameter of the second opening (124; 324);
wherein the third cable segment (216; 416) of the cable (210; 410; 510; 610) has a third outer diameter corresponding to the third inner diameter of the third opening (126; 326); and
wherein with the collar (100; 300) in the deformed state, the first portion (112; 312) securely engages the first cable segment (212; 412), the second portion (114; 314) securely engages the second cable segment (214; 414), and the third portion (116; 316) securely engages the third cable segment (216; 416).

4. The method of claim 3, wherein the cable (210; 410; 510; 610) is a coated cable including a wire rope (224; 424; 512; 612) and an outer coating (222; 422; 514; 614) surrounding the wire rope (224; 424; 512; 612), the wire rope (224; 424; 512; 612) including a central core (226; 426; 616) and a plurality of wire groups (225; 425; 517; 617) positioned about the central core (226; 426; 616), and wherein an outer diameter of the coated cable defines the first outer diameter of the first cable segment (212; 412).

5. The method of claim 4, further comprising removing the outer coating (222; 422; 514; 614) from the second cable segment (214; 414) and the third cable segment (216; 416), and wherein an outer diameter of the wire rope (224; 424; 512; 612) defines the second outer diameter of the second cable segment (214; 414).

6. The method of claim 5, wherein the outer diameter of the wire rope (224; 512; 612) defines the third outer diameter of the third cable segment (216), or
further comprising removing the wire groups (425; 517; 617) from the third cable segment (416), wherein an outer diameter of the central core (426; 616) defines the third outer diameter of the third cable segment (216).

7. The method of claim 3, wherein the first, second and third openings (122, 124; 126; 322, 324, 326) in the collar (100; 300) extend along a direction substantially parallel to a longitudinal axis of the collar (100; 300).

8. A cable assembly (200; 400), comprising:
a collar (100; 300) including a first opening (122; 322), a second opening (124; 324) and a third opening (126; 326), wherein each of the openings (122, 124, 126; 322, 324, 326) extends through the collar (100; 300) along a longitudinal dimension of the collar (100; 300); and
a cable (210; 410; 510; 610) comprising a looped end including a first cable segment (212; 412) extending through the first opening (122; 322), a second cable segment (214; 414) extending through the second opening (124; 324), a third cable segment (216; 416) extending into the third opening (126; 326), and a fourth cable segment (213; 413) forming a loop (223; 423) between the first cable segment (212; 412) and the second cable segment (214; 414); and
wherein the collar (100; 300) is crimped or swaged to the cable (210; 410; 510; 610) and is securely engaged with the first cable segment (212; 412), the second cable segment (214; 414) and the third cable segment (216; 416) to substantially prevent movement of the first, second and third cable segments (212, 214, 216; 412, 414, 416) relative to the collar (100; 300).

9. The cable assembly (200; 400) of claim 8, wherein the cable (210; 410; 510; 610) comprises a wire rope (224; 424; 512; 612) and an outer coating (222; 422; 514; 614), wherein the first cable segment (212; 412) and the fourth cable segment (213; 413) include the wire rope (224; 424; 512; 612) and the outer coating (222; 422; 514; 614), and wherein the second cable segment (214; 414) and the third cable segment (216; 416) do not include the outer coating (222; 422; 514; 614).

10. The cable assembly (200; 400) of claim 9, wherein the wire rope (224; 424; 512; 612) includes a central core (226; 426; 616) and a plurality of wire groups (225; 425; 517; 617) positioned about the central core (226; 426; 616); and
wherein the second cable segment (214; 414) includes the central core (226; 426; 616) and the plurality of wire groups (225; 425; 517; 617), and wherein the third cable segment (216; 416) includes at least the central core (226; 426; 616).

11. The cable assembly (200; 400) of claim 10, wherein the third cable segment (216) further includes the plurality of wire groups (225; 517; 617) and wherein the collar (100; 300) is directly engaged with the outer coating (222; 514; 614) of the first cable segment (212) and the wire groups (225; 517; 617) of the second cable segment (214) and the third cable segment (216),
or wherein the third cable segment (416) does not include the plurality of wire groups (425; 517; 617), and wherein the collar (100; 300) is directly engaged with the outer coating (422; 514; 614) of the first cable segment (412), the wire groups (425; 517; 617) of the second cable segment (414), and the central core (426; 616) of the third cable segment (416),
or wherein the central core (226; 426; 616) comprises a solid core consisting essentially of a single wire having an outer diameter corresponding to an outer diameter of each of the wire groups (225; 425; 617).

12. The cable assembly (200; 400) of claim 8, wherein each of the openings (122, 124, 126; 322, 324, 326) extends in a direction substantially parallel to a longitudinal axis of the collar (100; 300).

13. The cable assembly (200; 400) of claim 8, wherein the first opening (122; 322) is connected to and in transverse communication with the second opening (124; 324),
and wherein the third opening (126; 326) is preferably not connected to or in transverse communication with either the first opening (122; 322) or the second opening (124; 324).

14. The cable assembly (400) of claim 10, wherein the second cable segment (414) consists essentially of the wire rope (424; 612), and the third cable segment (416) consists essentially of the central core (426; 616).

## Patentansprüche

1. Ein Verfahren zum Bilden eines Seils mit Schlaufe (200; 400) aus einem Seil (210; 410; 510; 610) und einer Manschette (100; 300), das Folgendes umfasst:
Positionieren eines ersten Seilsegments (212; 412) des Seils (210; 410; 510; 610) in einer ersten Öffnung (122; 322) der Manschette (100; 300);
Positionieren eines zweiten Seilsegments (214; 414) des Seils (210; 410; 510; 610) in einer zweiten Öffnung (124; 324) der Manschette (100; 300);
Positionieren eines dritten Seilsegments (216; 416) des Seils (210; 410; 510; 610) in einer dritten Öffnung (126; 326) der Manschette (100; 300);
wobei sich jede der Öffnungen (122, 124, 126; 322, 324, 326) entlang einer längs verlaufenden Dimension der Manschette (100; 300) durch die Manschette (100; 300) erstreckt;
Bilden einer Schlaufe (223; 423) mit einem vierten Seilsegment (213; 413) des Seils (210; 410; 510; 610), wobei das vierte Seilsegment (213; 413) des Seils (210; 410; 510; 610) zwischen dem ersten Seilsegment (212; 412) und dem zweiten Seilsegment (214; 414) des Seils (210; 410; 510; 610) positioniert ist; und
Verformen der Manschette (100; 300) in einen verformten Zustand durch zumindest eines aus Quetschen und Stauchen der Manschette (100; 300), was die Manschette (100; 300) sicher in Eingriff um das erste Seilsegment (212; 412), das zweite Seilsegment (214; 414) und das dritte Seilsegment (216; 416) des Seils (210; 410; 510; 610) bringt, und im Wesentlichen Verhindern von Bewegung des ersten Seilsegments (212; 412), des zweiten Seilsegments (214; 414) und des dritten Seilsegments (216; 416) des Seils (210; 410; 510; 610) bezüglich der Manschette (100; 300).

2. Das Verfahren nach Anspruch 1, wobei das Seil (210; 410; 510; 610) ein Drahtseil (224; 424; 512; 612) und eine Außenbeschichtung (222; 422; 514; 614) umfasst, wobei das Verfahren ferner Entfernen der Beschichtung (222; 422; 514; 614) vom zweiten Seilsegment (214; 414) und vom dritten Seilsegment (216; 416) des Seils (210; 410; 510; 610) vor dem Verformen umfasst und vorzugsweise ferner Entfernen von mehreren Drahtgruppen (225; 425; 517; 617) vom dritten Seilsegment (216; 416) des Seils (210; 410; 510; 610) vor dem Verformen umfasst.

3. Das Verfahren nach Anspruch 1, wobei die Manschette (100; 300) einen ersten Teil (112; 312) umfasst, der die erste Öffnung (122; 322) definiert, wobei die erste Öffnung (122; 322) einen ersten Innendurchmesser aufweist;
wobei die Manschette (100; 300) einen zweiten Teil (114; 314) umfasst, der die zweite Öffnung (124; 324) definiert, wobei die zweite Öffnung (124; 324) einen zweiten Innendurchmesser aufweist;
wobei die Manschette (100; 300) einen dritten Teil (116; 316) umfasst, der die dritte Öffnung (126; 326) definiert, wobei die dritte Öffnung (126; 326) einen dritten Innendurchmesser aufweist;
wobei das erste Seilsegment (212; 412) des Seils (210; 410; 510; 610) einen ersten Außendurchmesser aufweist, der dem ersten Innendurchmesser der ersten Öffnung (122; 322) entspricht;
wobei das zweite Seilsegment (214; 414) des Seils (210; 410; 510; 610) einen zweiten Außendurchmesser aufweist, der dem zweiten Innendurchmesser der zweiten Öffnung (124; 324) entspricht;
wobei das dritte Seilsegment (216; 416) des Seils (210; 410; 510; 610) einen dritten Außendurchmesser aufweist, der dem dritten Innendurchmesser der dritten Öffnung (126; 326) entspricht; und
wobei, mit der Manschette (100; 300) im verformten Zustand, der erste Teil (112; 312) sicher in Eingriff mit dem ersten Seilsegment (212; 412) ist, der zweite Teil (114; 314) sicher in Eingriff mit dem zweiten Seilsegment (214; 414) ist und der dritte Teil (116; 316) sicher in Eingriff mit dem dritten Seilsegment (216; 416) ist.

4. Das Verfahren nach Anspruch 3, wobei das Seil (210; 410; 510; 610) ein beschichtetes Seil ist, umfassend ein Drahtseil (224; 424; 512; 612) und eine Außenbeschichtung (222; 422; 514; 614), die das Drahtseil (224; 424; 512; 612) umgibt, wobei das Drahtseil (224; 424; 512; 612) einen Mittelkern (226; 426; 616) und mehrere Drahtgruppen (225; 425; 517; 617), positioniert um den Mittelkern (226; 426; 616), umfasst, und wobei ein Außendurchmesser des beschichteten Seils den ersten Außendurchmesser des ersten Seilsegments (212; 412) definiert.

5. Das Verfahren nach Anspruch 4, das ferner Entfernen der Außenbeschichtung (222; 422; 514; 614) vom zweiten Seilsegment (214; 414) und vom dritten Seilsegment (216; 416) umfasst, und wobei ein Außendurchmesser des Drahtseils (224; 424; 512; 612) den zweiten Außendurchmesser des zweiten Seilsegments (214; 414) definiert.

6. Das Verfahren nach Anspruch 5, wobei der Außendurchmesser des Drahtseils (224; 512; 612) den dritten Außendurchmesser des dritten Seilsegments (216) definiert, oder
ferner umfassend Entfernen der Drahtgruppen (425; 517; 617) vom dritten Seilsegment (416), wobei ein Außendurchmesser des Mittelkerns (426; 616) den dritten Außendurchmesser des dritten Seilsegments (216) definiert.

7. Das Verfahren nach Anspruch 3, wobei sich die erste, zweite und dritte Öffnung (122, 124; 126; 322, 324, 326) in der Manschette (100; 300) entlang einer Richtung im Wesentlichen parallel zur Längsachse der Manschette (100; 300) erstrecken.

8. Eine Seilanordnung (200; 400), die Folgendes umfasst:
eine Manschette (100; 300), umfassend eine erste Öffnung (122; 322), eine zweite Öffnung (124; 324) und eine dritte Öffnung (126; 326), wobei sich jede der Öffnungen (122, 124, 126; 322, 324, 326) entlang einer längs verlaufenden Dimension der Manschette (100; 300) durch die Manschette (100; 300) erstreckt; und
ein Seil (210; 410; 510; 610), umfassend ein Schlaufenende, umfassend ein erstes Seilsegment (212; 412), das sich durch die erste Öffnung (122; 322) erstreckt, ein zweites Seilsegment (214; 414), das sich durch die zweite Öffnung (124; 324) erstreckt, ein drittes Seilsegment (216; 416), das sich in die dritte Öffnung (126; 326) erstreckt, und ein viertes Seilsegment (213; 413), das eine Schlaufe (223; 423) zwischen dem ersten Seilsegment (212; 412) und dem zweiten Seilsegment (214; 414) bildet; und
wobei die Manschette (100; 300) auf das Seil (210; 410; 510; 610) gequetscht oder gestaucht wird und sicher im Eingriff mit dem ersten Seilsegment (212; 412), dem zweiten Seilsegment (214; 414) und dem dritten Seilsegment (216; 416) ist, um im Wesentlichen Bewegung des ersten, zweiten und dritten Seilsegments (212, 214, 216; 412, 414, 416) bezüglich der Manschette (100; 300) zu verhindern.

9. Die Seilanordnung (200; 400) nach Anspruch 8, wobei das Seil (210; 410; 510; 610) ein Drahtseil (224; 424; 512; 612) und eine Außenbeschichtung (222; 422; 514; 614) umfasst, wobei das erste Seilsegment (212; 412) und das vierte Seilsegment (213; 413) das Drahtseil (224; 424; 512; 612) und die Außenbeschichtung (222; 422; 514; 614) umfassen, und wobei das zweite Seilsegment (214; 414) und das dritte Seilsegment (216; 416) die Außenbeschichtung (222; 422; 514; 614) nicht umfassen.

10. Die Seilanordnung (200; 400) nach Anspruch 9, wobei das Drahtseil (224; 424; 512; 612) einen Mittelkern (226; 426; 616) und mehrere Drahtgruppen (225; 425; 517; 617), positioniert um den Mittelkern (226; 426; 616) umfasst; und
wobei das zweite Seilsegment (214; 414) den Mittelkern (226; 426; 616) und die mehreren Drahtgruppen (225; 425; 517; 617) umfasst und wobei das dritte Seilsegment (216; 416) zumindest den Mittelkern (226; 426; 616) umfasst.

11. Die Seilanordnung (200; 400) nach Anspruch 10, wobei das dritte Seilsegment (216) ferner die mehreren Drahtgruppen (225; 517; 617) umfasst und wobei die Manschette (100; 300) in direktem Eingriff mit der Außenbeschichtung (222; 514; 614) des ersten Seilsegments (212) und den Drahtgruppen (225; 517; 617) des zweiten Seilsegments (214) und des dritten Seilsegments (216) ist,
oder wobei das dritte Seilsegment (416) die mehreren Drahtgruppen (425; 517; 617) nicht umfasst und wobei die Manschette (100; 300) in direktem Eingriff mit der Außenbeschichtung (422; 514; 614) des ersten Seilsegments (412) und den Drahtgruppen (425; 517; 617) des zweiten Seilsegments (414) und dem Mittelkern (426; 616) des dritten Seilsegments (416) ist,
oder wobei der Mittelkern (226; 426; 616) einen festen Kern umfasst, der im Wesentlichen aus einem einzelnen Draht mit einem Außendurchmesser besteht, der dem Außendurchmesser jeder der Drahtgruppen (225; 425; 617) entspricht.

12. Die Seilanordnung (200; 400) nach Anspruch 8, wobei sich jede der Öffnungen (122, 124, 126; 322, 324, 326) in eine Richtung im Wesentlichen parallel zu einer Längsachse der Manschette (100; 300) erstreckt.

13. Die Seilanordnung (200; 400) nach Anspruch 8, wobei die erste Öffnung (122; 322) mit der zweiten Öffnung (124; 324) verbunden ist und mit dieser in Querverbindung ist, und wobei die dritte Öffnung (126; 326) vorzugsweise nicht mit der ersten Öffnung (122; 322) oder der zweiten Öffnung (124; 324) verbunden oder damit in Querverbindung ist.

14. Die Seilanordnung (400) nach Anspruch 10, wobei das zweite Seilsegment (414) im Wesentlichen aus dem Drahtseil (424; 612) besteht und das dritte Seilsegment (416) im Wesentlichen aus dem Mittelkern (426; 616) besteht.

## Revendications

1. Un procédé de formation d'un câble en boucle (200; 400) à partir d'un câble (210; 410; 510; 610) et d'un collier (100; 300), comprenant :
le positionnement d'un premier segment de câble (212; 412) du câble (210; 410; 510; 610) dans une première ouverture (122; 322) du collier (100; 300) ;
le positionnement d'un deuxième segment de câble (214; 414) du câble (210; 410; 510; 610) dans une deuxième ouverture (124; 324) du collier (100; 300) ;
le positionnement d'un troisième segment de câble (216; 416) du câble (210; 410; 510; 610) dans une troisième ouverture (126; 326) du collier (100; 300) ;
dans lequel chacune des ouvertures (122, 124, 126; 322, 324, 326) s'étend à travers le collier (100; 300) le long d'une dimension longitudinale du collier (100; 300) ;
la formation d'une boucle (223; 423) avec un quatrième segment de câble (213; 413) du câble (210; 410; 510; 610), dans lequel le quatrième segment de câble (213; 413) du câble (210; 410; 510; 610) est positionné entre le premier segment de câble (212; 412) et le deuxième segment de câble (214; 414) du câble (210; 410; 510; 610) ; et
la déformation du collier (100; 300) dans un état déformé par au moins l'un parmi un sertissage et un martelage du collier (100; 300), qui engage solidement le collier (100; 300) autour du premier segment de câble (212; 412), du deuxième segment de câble (214; 414) et du troisième segment de câble (216; 416) du câble (210; 410; 510; 610), et la prévention substantielle de tout mouvement du premier segment de câble (212; 412), du deuxième segment de câble (214; 414) et du troisième segment de câble (216; 416) du câble (210; 410; 510; 610) par rapport au collier (100; 300).

2. Le procédé selon la revendication 1, dans lequel le câble (210; 410; 510; 610) comprend un câble à filaments (224; 424; 512; 612) et un revêtement externe (222; 422; 514; 614), le procédé comprenant en outre le retrait du revêtement (222; 422; 514; 614) du deuxième segment de câble (214; 414) et du troisième segment de câble (216; 416) du câble (210; 410; 510; 610) avant la déformation et comprenant de préférence en outre le retrait d'une pluralité de groupes de filaments (225; 425; 517; 617) du troisième segment de câble (216; 416) du câble (210; 410; 510; 610) avant la déformation.

3. Le procédé selon la revendication 1, dans lequel le collier (100; 300) comprend une première portion (112; 312) définissant la première ouverture (122; 322), la première ouverture (122; 322) présentant un premier diamètre interne ;
dans lequel le collier (100; 300) comprend une deuxième portion (114; 314) définissant la deuxième ouverture (124; 324), la deuxième ouverture (124; 324) présentant un deuxième diamètre interne ;
dans lequel le collier (100; 3000) comprend une troisième portion (116; 316) définissant la troisième ouverture (126; 326), la troisième ouverture (126; 326) présentant un troisième diamètre interne ;
dans lequel le premier segment de câble (212; 412) du câble (210; 410; 510; 610) présente un premier diamètre externe correspondant au première diamètre interne de la première ouverture (122; 322) ;
dans lequel le deuxième segment de câble (214; 414) du câble (210; 410; 510; 610) présente un deuxième diamètre externe correspondant au deuxième diamètre interne de la deuxième ouverture (124; 324) ;
dans lequel le troisième segment de câble (216; 416) du câble (210; 410; 510; 610) présente un troisième diamètre externe correspondant au troisième diamètre interne de la troisième ouverture (126; 326) ; et
dans lequel, lorsque le collier (100; 300) est à l'état déformé, la première portion (112; 312) est en prise fixe avec le premier segment de câble (212; 412), la deuxième partie (114; 314) engage solidement le deuxième segment de câble (214; 414) et la troisième portion (116; 316) engage solidement le troisième segment de câble (216; 416).

4. Le procédé selon la revendication 3, dans lequel le câble (210; 410; 510; 610) est un câble revêtu comprenant un câble à filaments (224; 424; 512; 612) et un revêtement externe (222; 422; 514; 614) entourant le câble à filaments (224; 424; 512; 612), le câble à filaments (224; 424; 512; 612) comprenant une âme centrale (226; 426; 616) et une pluralité de groupes de filaments (225; 425; 517; 617) positionnés autour de l'âme centrale (226; 426; 616), et dans lequel un diamètre externe du câble revêtu définit le premier diamètre externe du premier segment de câble (212; 412).

5. Le procédé selon la revendication 4, comprenant en outre le retrait du revêtement externe (222; 422; 514; 614) du deuxième segment de câble (214; 414) et du troisième segment de câble (216; 416), et dans lequel un diamètre externe du câble à filaments (224; 424; 512; 612) définit le deuxième diamètre externe du deuxième segment de câble (214; 414).

6. Le procédé selon la revendication 5, dans lequel le diamètre externe du câble à filaments (224; 512; 612) définit le troisième diamètre externe du troisième segment de câble (216), ou
comprenant en outre le retrait des groupes de filaments (425; 517; 617) du troisième segment de câble (416), dans lequel un diamètre externe de l'âme centrale (426; 616) définit le troisième diamètre externe du troisième segment de câble (216).

7. Le procédé selon la revendication 3, dans lequel les première, deuxième et troisième ouvertures (122, 124 ; 126 ; 322, 324 ; 326) dans le collier (100 ; 300) s'étendent le long d'une direction substantiellement parallèle à un axe longitudinal du collier (100 ; 300).

8. Un assemblage de câble (200; 400), comprenant :
un collier (100; 300) comprenant une première ouverture (122; 322), une deuxième ouverture (124; 324) et une troisième ouverture (126; 326), dans lequel chacune des ouvertures (122, 124, 126; 322, 324, 326) s'étend à travers le collier (100; 300) le long d'une dimension longitudinale du collier (100; 300) ; et
un câble (210; 410; 510; 610) comprenant une extrémité en boucle comprenant un premier segment de câble (212; 412) s'étendant à travers la première ouverture (122; 322), un deuxième segment de câble (214; 414) s'étendant à travers la deuxième ouverture (124; 324), un troisième segment de câble (216; 416) s'étendant à travers la troisième ouverture (126; 326) et un quatrième segment de câble (213; 413) formant une boucle (223; 423) entre le premier segment de câble (212; 412) et le deuxième segment de câble (214; 414) ; et
dans lequel le collier (100; 300) est serti ou martelé sur le câble (210; 410; 510; 610) et est solidement engagé avec le premier segment de câble (212; 412), le deuxième segment de câble (214; 414) et le troisième segment de câble (216; 416) afin de substantiellement prévenir tout mouvement des premier, deuxième et troisième segments de câble (212, 214, 216; 412, 414, 416) par rapport au collier (100; 300).

9. L'assemblage de câble (200; 400) selon la revendication 8, dans lequel le câble (210; 410; 510; 610) comprend un câble à filaments (224; 424; 512; 612) et un revêtement externe (222; 422; 514; 614), dans lequel le premier segment de câble (212; 412) et le quatrième segment de câble (213; 413) comprennent le câble à filaments (224; 424; 512; 612) et le revêtement externe (222; 422; 514; 614), et dans lequel le deuxième segment de câble (214; 414) et le troisième segment de câble (216; 416) ne comprennent pas le revêtement externe (222; 422; 514; 614).

10. L'assemblage de câble (200; 400) selon la revendication 9, dans lequel le câble à filaments (224; 424; 512; 612) comprend une âme centrale (226; 426; 616) et une pluralité de groupes de filaments (225; 425; 517; 617) positionnés autour de l'âme centrale (226; 426; 616) ; et
dans lequel le deuxième segment de câble (214; 414) comprend l'âme centrale (226; 426; 616) et la pluralité de groupes de filaments (225; 425; 517; 617), et dans lequel le troisième segment de câble (216; 416) comprend au moins l'âme centrale (226; 426; 616).

11. L'assemblage de câble (200; 400) selon la revendication 10, dans lequel le troisième segment de câble (216) comprend en outre la pluralité de groupes de filaments (225; 517; 617) et dans lequel le collier (100; 300) est directement engagé avec le revêtement externe (222; 514; 614) du premier segment de câble (212) et les groupes de filaments (225; 517; 617) du deuxième segment de câble (214) et du troisième segment de câble (216),
ou dans lequel le troisième segment de câble (416) ne comprend pas la pluralité de groupes de filaments (425; 517; 617), et dans lequel le collier (100; 300) est directement engagé avec le revêtement externe (422; 514; 614) du premier segment de câble (412), les groupes de filaments (425; 517; 617) du deuxième segment de câble (414) et l'âme centrale (426; 616) du troisième segment de câble (416),
ou dans lequel l'âme centrale (226; 426; 616) comprend une âme solide essentiellement constituée d'un filament unique présentant un diamètre externe correspondant à un diamètre externe de chacun des groupes de filaments (225; 425; 617).

12. L'assemblage de câble (200; 400) selon la revendication 8, dans lequel chacune des ouvertures (122, 124, 126; 322, 324, 326) s'étend dans une direction substantiellement parallèle à un axe longitudinal du collier (100; 300).

13. L'assemblage de câble (200; 400) selon la revendication 8, dans lequel la première ouverture (122; 322) est reliée à et en communication transversale avec la deuxième ouverture (124; 324), et dans lequel la troisième ouverture (126; 326) est de préférence non reliée à ni en communication transversale avec la première ouverture (122; 322) ou la deuxième ouverture (124; 324).

14. L'assemblage de câble (400) selon la revendication 10, dans lequel le deuxième segment de câble (414) est essentiellement constitué du câble à filaments (424; 612), et le troisième segment de câble (416) est essentiellement constitué de l'âme centrale (426; 616).
